# EUROPEAN PATENT APPLICATION

(11) **EP 4 668 573 A1**
(43) Date of publication of application: **24.12.2025**
(21) Application number: 25168205.0
(22) Date of filing: 03.04.2025
(51) Int. Cl.: H02S 20/32

(54) **ARTICULATING SOLAR TRACKER SUPPORT**

(30) Priority: 18.06.2024 US 202463661101 P; 28.03.2025 US 202519093954
(71) Applicant: DS2.0, LLC, Portland, TN 37148 (US)
(72) Inventor: SOLON, Dean, Portland / TN, 37148 (US)
(74) Representative: Fish & Richardson P.C.

(57) **Abstract**

The present disclosure involves systems, and an apparatus supporting an array of solar panels, the system including a bearing assembly configured to support a tracking shaft while allowing the tracking shaft to rotate about an axis and a torsion bar with a first end configured to be affixed to a pile, and a second end configured to be coupled to the tracking shaft, the torsion bar configured to function as a torsion spring exerting torque on the tracking shaft in response to rotation of the tracking shaft about the axis.

## Description

### BACKGROUND

Ground-mounted photovoltaic solar panel arrays are often installed on racking systems using pile foundations. The solar panels ("panels") in the array can be configured to tilt in order to track the sun and increase the electrical power generated by the solar panels. This solar tracking can be implemented using a shaft or series of coupled shafts that rotate and apply torque to the shaft.

### SUMMARY

The present disclosure involves systems, and an apparatus supporting an array of solar panels, the system including a bearing assembly configured to support a tracking shaft while allowing the tracking shaft to rotate about an axis and a torsion bar with a first end configured to be affixed to a pile, and a second end configured to be coupled to the tracking shaft, the torsion bar configured to function as a torsion spring exerting torque on the tracking shaft in response to rotation of the tracking shaft about the axis.

Implementations can include one or more of the following features.

In some instances, the second end of the torsion bar is coupled to the tracking shaft by one or more gears. In some instances, the one or more gears are configured to interface with teeth in the tracking shaft.

In some instances, the torsion bar is a first torsion bar, and the system includes a second torsion bar that has a first end affixed to the pile and a second end coupled to the tracking shaft. In some instances, the first torsion bar and the second torsion bar are configured to be in a relaxed state when the tracking shaft is in a neutral position, and the relaxed state is a state where the torsion bar exerts less than a specified amount of torque on the tracking shaft. In some instances, the neutral position is a position where solar panels mounted on the tracking shaft are in a horizontal position.

In some instances, the first torsion bar is configured to be coupled to the tracking shaft by a first mutilated gear, and the first mutilated gear is configured to engage the torsion bar with the tracking shaft when the tracking shaft rotates about the axis in a first direction from the neutral position. The second torsion bar can be configured to be coupled to the tracking shaft by a second mutilated gear, where the second mutilate gear is configured to engage the torsion bar with the tracking shaft when the tracking shaft rotates about the axis in a second direction from the neutral position, the second direction opposite the first direction.

In some instances, a solar panel is mounted to the tracking shaft, the solar panel and tracking shaft having a center of gravity that is not coincident with the axis.

In some instances, a helical torsion spring is coupled between the pile and the tracking shaft.

The configuration of the disclosed system is advantageous, for example, because it reduces the size of the tracking motor required to enable tracking solar panels as well as reduce the load requirements of structural material such as the torque tube and piles. The reduced size motor and structure is generally less expensive and consumes less energy. Additionally, the solar array can include a resting or neutral point in the horizontal position, which can be useful for high wind environments or cleaning operations.

The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIG. 1 depicts an example of a tracking solar array with sprung supports.
FIG. 2 illustrates a side view of a solar panel mounted to a tracking shaft causing an offset center of gravity.
FIG. 3 illustrates a side view of a torsion bar sprung support.
FIG. 4 illustrates a side view of a sprung support with horizontal torsion bars and torsion springs.
FIG. 5 illustrates a side view of a sprung support with internal torsion bars.

### DETAILED DESCRIPTION

This disclosure describes implementations of a sprung support for a solar array ("array") that enables the array to rotate to the optimal solar angle while consuming less energy in tilting/rotating the plane of array of the solar panels. Many arrays include a torque shaft or tracking shaft that rotates about its axis (or a proximal parallel axis), and has the solar panels mounted to it. The result is an off-center/offset center of gravity as the weight of the panels "hangs off" the side of the shaft. Conventional systems often compensate for this by using oversized or over-geared tracking motors, which are capable of lifting the panels, but also require more energy, are more expensive, and heavier than necessary. The disclosed support system for the solar array includes a spring system, using torsion bars and/or helical springs to assist in offsetting the weight of the panels on the torque shaft. By using sprung supports, the tracking motor and structural components of the array can be reduced in size, complexity, weight, and cost.

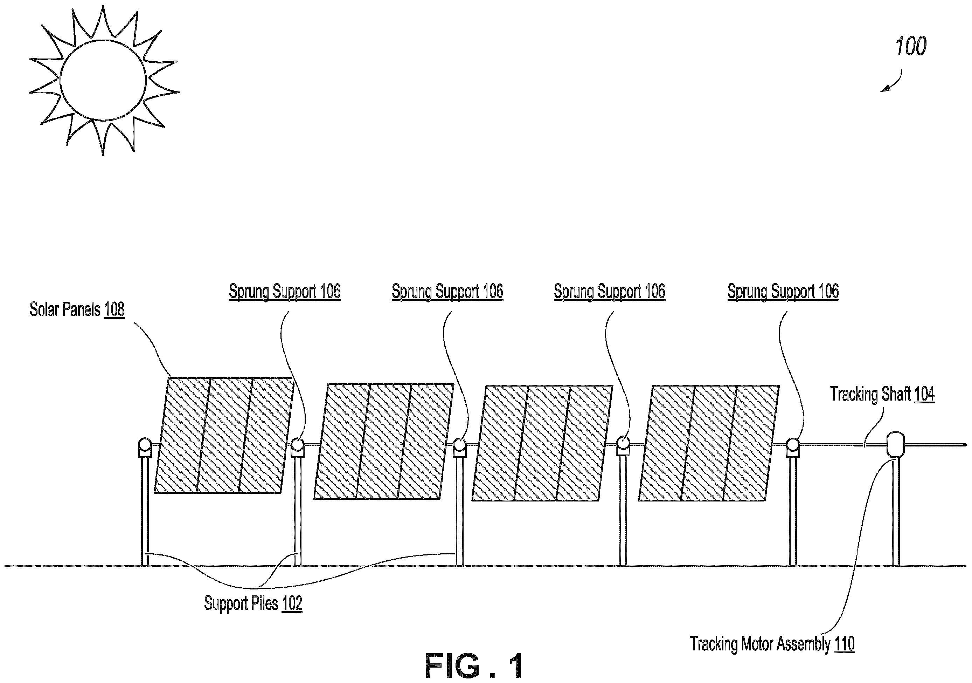

Turning to FIG. 1, an example of a tracking solar array with sprung supports 100 is shown. In the illustrated example, a single tracking motor assembly 110 provides torque to a tracking shaft 104, which is supported by a series of support piles 102 with sprung supports 106. The tracking shaft 104 includes mounted solar panels 108.

Each solar panel 108 can be formed of multiple solar modules, which themselves are made up of multiple solar cells. The cells use photovoltaics to convert solar irradiance to an electrical charge, which is used to generate current and/or voltage. To maximize the generated power using only one-axis of free motion, the solar panels 108 should be directed to an angle matching the azimuth angle of the sun at each moment in time and thus maximizing the captured solar irradiation, which is achieved by mounting the solar panels 108 on a rotating tracking shaft 104. The tracking shaft 104 can be formed of multiple segments, and acts as a torque tube to hold and rotate the solar panels 108 in order to improve their alignment with the sun throughout the day.

The tracking shaft is supported by one or more bearings on support piles 102, which are sprung supports 106 that assist in countering torque in the tracking shaft generated by the weight of the solar panels 108. A tracking motor 110 provides torque to rotate the array 100 as necessary to maximize power output or for other purposes such as alignment for cleaning, or positioning to minimize weather effects (e.g., hail damage, wind, etc.).

While the illustrated example includes a sprung support 106 on each illustrated support pile 102, other configurations are feasible. For example, some supports may only include bearings, with simply a couple of sprung supports 106 throughout the array. In another example, the support pile 102 that holds the tracking motor 110 can be sprung, while the remaining supports are un-sprung.

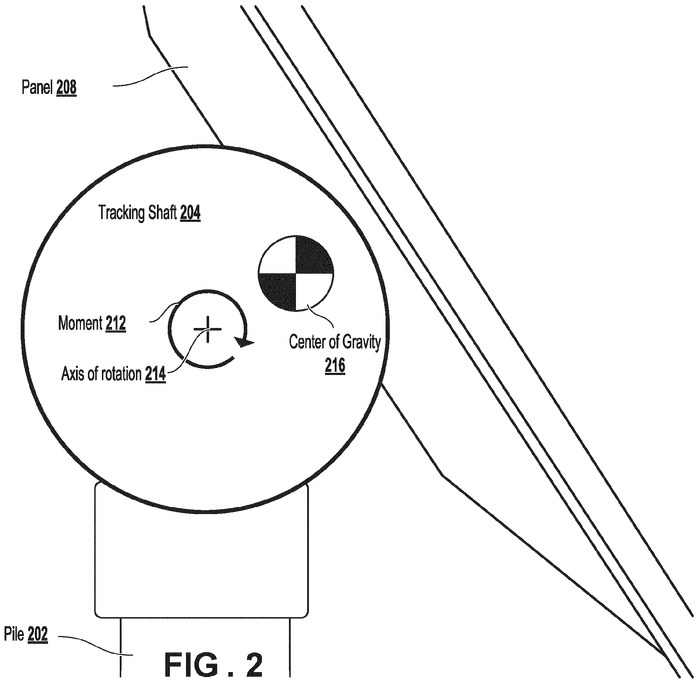

FIG. 2 illustrates a side view of a solar panel 208 mounted to a tracking shaft 204 causing an offset center of gravity. The tracking shaft 204 rotates about its centerline along an axis of rotation 214. However, panel 208 is mounted on a side or edge of the tracking shaft 204. Additionally in many implementations the panel 208, or group of panels 208 will weigh significantly more than the tracking shaft 204. This results in an off-axis center of gravity 216 that creates a moment 212 about the axis of rotation 214 in the tracking shaft 204.

This moment 212 is caused by the off-axis center of gravity 216 that is a result of the combination panel 208 and tracking shaft 204. The effect is that the moment 212 will tend to "pull" the panel 208 down to a vertical position in the direction it is rotated. For example, in the illustrated implementation, the panel 208 and tracking shaft 204 are rotated approximately forty-five degrees to the right (clockwise). In implementations where the panel 208 and tracking shaft 204 are rotated to the left (counter-clockwise) the moment 212 will be reversed. This creates an unstable system where, without external stabilization, the panels 208 will tend to "fall" to a vertical position.

To counter this moment 212, conventional systems can use oversized tracking motors or ratcheting or gearing mechanisms to limit travel and counter the moment 212. This disclosure focuses on the use of spring mechanisms to store energy as the panel 208 is lowered and return it to the system as it is raised. This reduces the overall torque required to be provided by the tracking motor and can result in a system that is inherently stable in the upright/horizontal position of the solar panels 208.

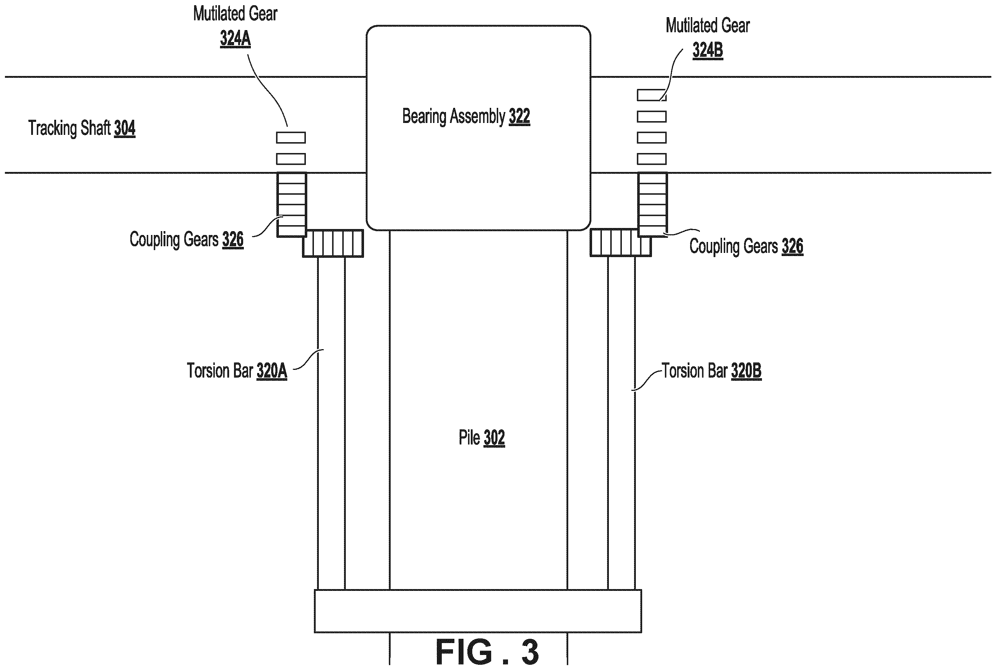

FIG. 3 illustrates a side view of a torsion bar sprung support. Tracking shaft 304 is mounted within bearing assembly 322 and can rotate about its axis. A set of torsion bars 320A and 320B are affixed to the pile 302 on one end and coupled to the tracking shaft 304 by a set of coupling gears 336. In the illustrated example, the coupling gears 336 are bevel gears, however any suitable gear mechanism can be considered. Additionally, gears are not necessary. In some implementations the torsion bars 320A and 320B can be coupled to the tracking shaft 304 using pivoting linkages, or affixed lever arms, among other things.

As the tracking shaft 304 rotates, the torsion bars 320A and 320B twist, generating shear stress within the torsion bar and causing the bar to apply a reciprocal force back. Torsion bars can be an inexpensive and reliable way to implement a weatherproof, and robust spring.

The torsion bars 320A and 320B interface with the tracking shaft 304 by integral mutilated gears 324A and 324B respectively. While illustrated as integrated with the tracking shaft 304, the mutilated gears 324 can be a component of the bearing assembly 322, or separately affixed to the tracking shaft, for example, using a key/keyway mounting system. The mutilated gears 324A and 324B allow a single torsion bar to be engaged for tracking in one direction (e.g., East) while a separate torsion bar is engaged for tracking in the other direction (e.g., West).

For example, when the tracking shaft 304 is in a neutral or 12 O'clock position, with the solar panel in a horizontal configuration, both torsion bars 320A and 320B can be relaxed, or relatively untwisted, and exert little or no torque on the tracking shaft 304. For example, the torsion bars 320A and 320B can exert less than 50 N-m of torque. As the tracking shaft 304 is rotated in a first direction, such as East, torsion bar 320A can be twisted as it is engaged with mutilated gear 324A through coupling gears 326. As the tracking shaft 304 rotates in the first direction, mutilated gear 324B can disengage, preventing torsion bar 320B from twisting, and allowing it to relax. The opposite occurs when the tracking shaft 304 rotates in the second direction, to the West. Mutilated gear 324B engages and torsion bar 320B twists, while torsion bar 320A relaxes as mutilated gear 324A disengages. The use of separate torsion bars 320A and 320B and mutilated gears 324A and 324B means each torsion bar need only be capable of twisting for half of the tracking shaft 304's overall range of motion. This enables the use of shorter torsion bars.

In some implementations, no mutilated gears 324 are used, and instead the torsion bars 320A and 320B remain engaged throughout the full range of travel. In these implementations, the torsion bars 320 will need to twist in two directions, with their aligned, or untwisted point at the horizontal.

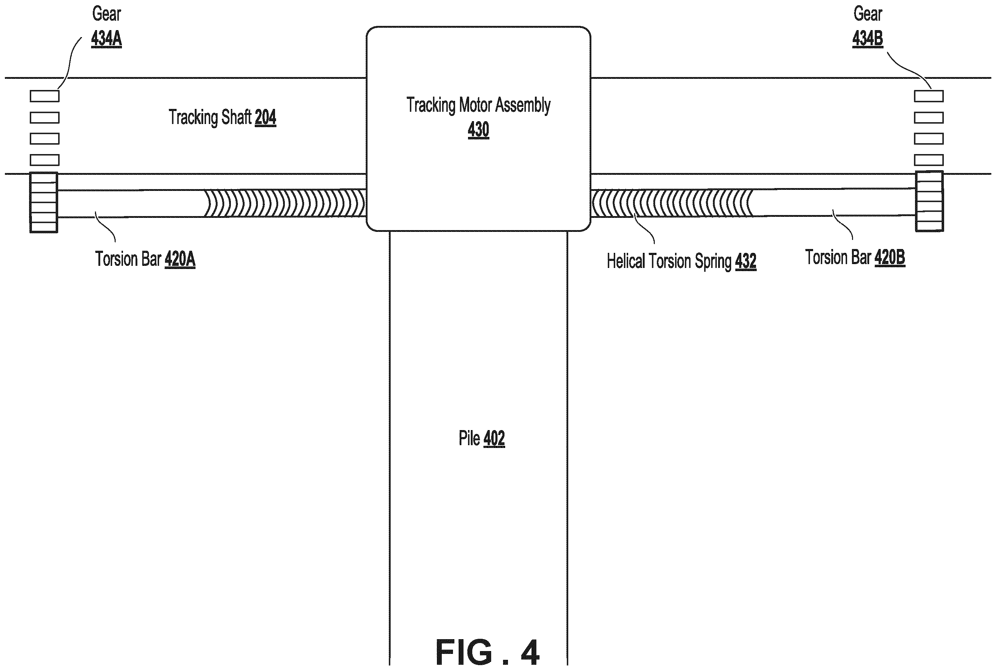

FIG. 4 illustrates a side view of a sprung support with horizontal torsion bars and torsion springs. The tracking shaft 204 is supported by a tracking motor assembly 430, which can include bearings similar to bearing assembly 322 in addition to motor components that apply torque to rotate the tracking shaft 204. Torsion bars 420A and 420B are affixed at one end to the pile 402 or the tracking motor assembly 430 and mate with gears 434A and 434B respectively. Additionally, a helical torsion spring 432 is included on each torsion bar 420A and 420B to provide additional spring moments to counter the weight of panels on the tracking shaft 204.

Tracking motor assembly 430 can be an electric motor capable of providing reliable positioning for the tracking shaft 204. For example, tracking motor 430 can be a brushless DC motor, stepper motor, servo motor, brushed motor with encoder or potentiometer position measurement, or another suitable motor. In some implementations, tracking motor assembly 430 includes bearings, supports and other necessary mechanical components, as well as circuitry and electronics for operation of the tracking motor assembly 430.

Helical torsion springs 432, can be implemented to provide supplemental torque. While illustrated as encircling the torsion bars 420A and 420B, the helical torsion springs 432 can be separate from the torsion bars 420A. For example, helical torsion springs 432 can be implemented within the tracking shaft 204, tracking motor assembly 430, or other location. In some implementations, helical torsion springs 432 can be used in place of, independently from torsion bars.

Other springs are further possible. For example, a spiral spring or "clock" spring, sets of coil springs, or other devices can be used either independently, or to augment the torque provided by torsion bars 420A and 420B and/or helical torsion springs 432.

Torsion bars 420A and 420B are illustrated in a horizontal configuration. This positioning allows torsion bars 420A and 420B to be more directly geared to the tracking shaft 204, without need for intermediate coupling gears as illustrated above in FIG. 3. Horizontal torsion bars can be advantageous in that they can be longer than vertical torsion bars, allowing for more deflection or "twist" and thus more spring displacement. In some implementations torsion bars 420A and 420B can be installed at an angle, for example, forty-five degrees relative to the tracking shaft 204, or other angle as desired. The affixed end of the torsion bars 420A and 420B can be affixed to the tracking motor assembly 430 (or bearing assembly 322), pile 402, or a separate structure such as an anchor or foundation embedded in the ground.

Gears 434A and 434B can be mutilated or not mutilated. If mutilated, they can operate similarly to gears 324A and 324B of FIG. 3. As illustrated, gears 424A and 424B are not mutilated, and torsion bars 420A and 420B are twisted any time the tracking shaft 204 rotates from a neutral position. This configuration can be advantageous in that both torsion bars 420A and 420B work in concert, so each individual bar needs to exert less torque on the tracking shaft 204 to compensate for the weight of the solar panels.

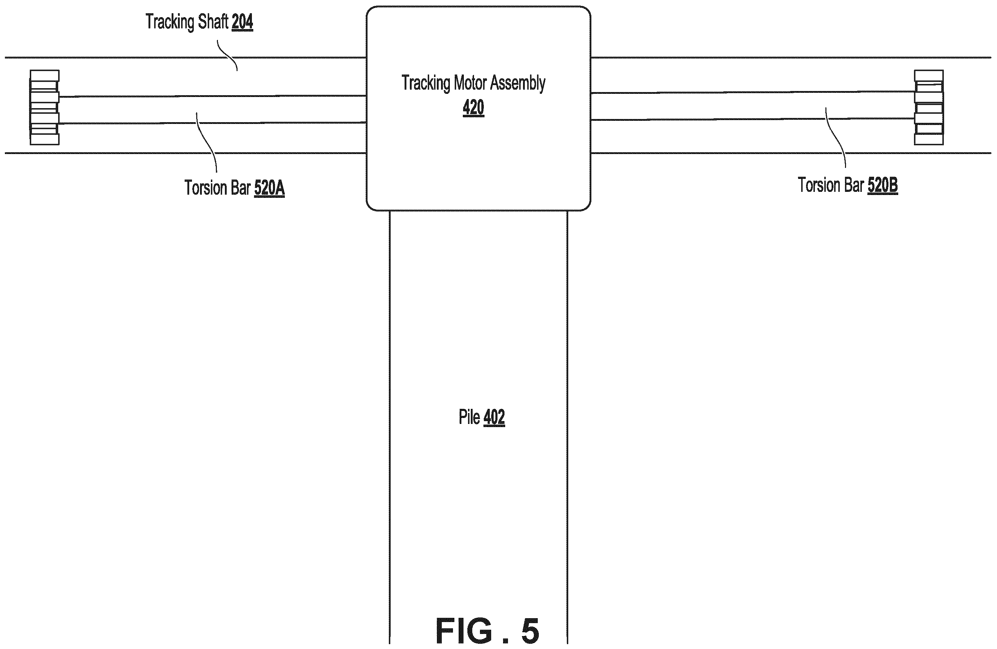

FIG. 5 illustrates a side view of a sprung support with internal torsion bars. Torsion bars 520A and 520 B are located internally to the tracking shaft 204 and can be affixed or geared at the outer ends, and affixed to a stationary component of the tracking motor assembly 420 at the inner end.

Internal torsion bars 520A and 520B can be advantageous in that they don't take up additional volume or space outside the standard footprint of the tracking solar system. Additionally, they can be shielded from the environment/weather conditions and as a result there is less need to mitigate corrosion and wear.

Although this disclosure has been described in terms of certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure.

The foregoing description is provided in the context of one or more particular implementations. Various modifications, alterations, and permutations of the disclosed implementations can be made without departing from scope of the disclosure. Thus, the present disclosure is not intended to be limited only to the described or illustrated implementations but is to be accorded the widest scope consistent with the principles and features disclosed herein.

## Claims

1. A solar array system comprising:
a bearing assembly configured to support a tracking shaft while allowing the tracking shaft to rotate about an axis; and
a torsion bar with a first end configured to be affixed to a pile, and a second end configured to be coupled to the tracking shaft, wherein the torsion bar is configured to function as a torsion spring exerting torque on the tracking shaft in response to rotation of the tracking shaft about the axis.

2. The solar array system of claim 1, wherein the second end of the torsion bar is configured to be coupled to the tracking shaft by one or more gears.

3. The solar array system of claim 2, wherein the one or more gears are configured to interface with teeth in the tracking shaft.

4. The solar array system of any preceding claim, wherein the torsion bar is a first torsion bar, the system further comprising a second torsion bar comprising a first end configured to be affixed to the pile and a second end configured to be coupled to the tracking shaft.

5. The solar array system of claim 4, wherein the first torsion bar and the second torsion bar are configured to be in a relaxed state when the tracking shaft is in a neutral position, wherein the relaxed state is a state where the torsion bar exerts less than a specified amount of torque on the tracking shaft.

6. The solar array system of claim 5, wherein the neutral position is a position where solar panels mounted on the tracking shaft are in a horizontal position.

7. The solar array system of claim 4 or 5, wherein the first torsion bar is configured to be coupled to the tracking shaft by a first mutilated gear, wherein the first mutilated gear is configured to engage the torsion bar with the tracking shaft when the tracking shaft rotates about the axis in a first direction from the neutral position; and
wherein the second torsion bar is configured to be coupled to the tracking shaft by a second mutilated gear, wherein the second mutilated gear is configured to engage the torsion bar with the tracking shaft when the tracking shaft rotates about the axis in a second direction from the neutral position, the second direction opposite the first direction.

8. The solar array system of any preceding claim, comprising a solar panel mounted to the tracking shaft, wherein the solar panel and tracking shaft have a center of gravity that is not coincident with the axis.

9. The solar array system of any preceding claim, comprising a helical torsion spring coupled between the pile and the tracking shaft.
